# EUROPÄISCHE PATENTSCHRIFT

(11) **EP 1 084 337 B1**
(45) Veröffentlichungstag und Bekanntmachung des Hinweises auf die Patenterteilung: **31.07.2002**
(21) Anmeldenummer: 99923296.0
(22) Anmeldetag: 27.05.1999
(51) Int. Cl.: F02C 3/30, F02C 7/228

(54) **ÖLVERSORGUNGSSYSTEM FÜR EINE GASTURBINE**
OIL SUPPLY SYSTEM FOR A GAS TURBINE
SYSTEME D'ALIMENTATION EN HUILE DESTINE A UNE TURBINE A GAZ

(30) Priorität: 29.05.1998 AT 92498
(43) Veröffentlichungstag der Anmeldung: 21.03.2001
(73) Patentinhaber: Linzer Elektrizitäts-, Fernwärme- und verkehrsbetriebe Aktiengesellschaft, 4020 Linz (AT); Ausserwöger, Gottfried, 4040 Linz (AT)
(72) Erfinder: AUSSERWÖGER, Gottfried, A-4040 Linz (AT); HESS, Alexander, A-4040 Linz (AT)
(74) Vertreter: Hübscher, Helmut, Dipl.-Ing.
(86) Internationale Anmeldenummer: AT9900134
(87) Internationale Veröffentlichungsnummer: WO9963209

(56) Entgegenhaltungen:
- EP-A- 0 517 646
- EP-A- 0 590 829
- DE-A- 19 548 739
- US-A- 4 214 435
- US-A- 4 259 837
- US-A- 4 603 548
- US-A- 5 469 700
- US-A- 5 617 719

## Beschreibung

### Technisches Gebiet

Die Erfindung bezieht sich auf ein Ölversorgungssystem für eine Gasturbine, deren primär- und sekundärdüsenbestückte Brennkammern wahlweise gas- oder ölbefeuerbar sind, mit einer Ölzufuhreinrichtung, einer Wasserzufuhreinrichtung und einer Ausblaseeinrichtung, welche Ölzufuhreinrichtung eine Ölversorgungsleitung mit einem an die Brennkammeranzahl angepaßten Mengenteiler, einzelne, vom Mengenteiler zu den Brennkammern führende Primärölleitungen zur Ölbeaufschlagung der Primärdüsen und zu den Primärölleitungen parallelverlaufende, zu den Brennkammern führende Sekundärölleitungen zur Ölbeaufschlagung der Sekundärdüsen aufweist, welche Wasserzufuhreinrichtung eine Wasserversorgungsleitung und der Brennkammeranzahl entsprechend viele, über einen Verteiler an die Wasserversorgungsleitung angeschlossene Primärwasserleitungen und Sekundärwasserleitungen zur Wasserbeaufschlagung der Primär- und Sekundärdüsen bzw. der zugehörigen Brennzonen aufweist und welche Ausblaseeinrichtung eine sich in zwei Versorgungsäste aufteilende Luftversorgungsleitung und zwei an die Versorgungsäste über Zuschaltventile angeschlossene Ringleitungen mit jeweils der Brennkammeranzahl entsprechend vielen abzweigenden Primärluftleitungen und Sekundärluftleitungen zum Ausblasen der Primär- bzw. Sekundärdüsen aufweist.

### Stand der Technik

Zum Reduzieren der Stickoxide im Abgas einer Gasturbine mit Hauptbrennkammer und Nachbrenner ist es bekannt (US 4 603 548 A) nach einem Zünden des Nachbrenners die in die Hauptbrennkammer eingespritzte Kraftstoffmenge zu verringern. Ein gleichmäßiges und damit einen schonenden Betrieb der Gasturbine ermöglichendes Umstellen der Gasturbine von Ölbetrieb auf Gasbetrieb ist mit dieser Vorrichtung bzw. nach diesem Verfahren nicht möglich.

Um bei Gasturbinen mit wahlweise gas- oder ölbefeuerbaren Brennkammern die vorgeschriebenen, oft schon sehr strengen Emissionswerte einhalten zu können, werden diese Gasturbinen nach dem Dual-Fuel-Dry-Low-Nox(DLN)-Verfahren betrieben, nach dem thermisches NOx bereits in der Brennkammer durch eine bessere Vermischung von Gas und Luft reduziert wird, was pro Brennkammer ein Mehrdüsensystem aus Primärdüsen und Sekundärdüsen voraussetzt. Die NOx-Reduzierung erfolgt bei Ölbetrieb durch Eindüsen von Wasser zur Flammenkühlung, wobei Wasser und Öl unmittelbar vor der Brennkammer zusammengemischt oder jeweils separat in die Brennkammern eingespritzt werden. Wird die Turbine von Öl- auf Gasbetrieb umgestellt, muß jeder Öl- und Wasserkanal jeder Brenndüse mit Luft ausgeblasen werden, um die Ölreste zu beseitigen und für eine ständige Kanalkühlung zu sorgen. Die Gasturbine benötigt daher für den Ölbetrieb ein Ölversorgungssystem, das eine Ölzufuhreinrichtung, eine Wasserzufuhreinrichtung und eine Ausblaseeinrichtung umfaßt und das im Vergleich zum Gasbetrieb beträchtliche Schwierigkeiten hinsichtlich der Regelung und Zuteilung der Betriebsmittel mit sich bringt.

Bisher wird zur Ölversorgung das über eine Ölpumpe zugeförderte Brennöl durch einen Mengenteiler in einzelne, zu den Brennkammern führende Primärölleitungen für die Primärdüsenbeaufschlagung gepumpt, von welchen Primärölleitungen die Sekundärölleitungen zur Sekundärdüsenbeaufschlagung abzweigen. Sekundärventile erlauben dabei das Zu- und Abschalten der Sekundärölleitungen, da die Sekundärdüsen erst ab einer bestimmten Feuerungstemperatur befeuert werden, wobei bis dahin die gesamte Brennstoffmenge den Primärdüsen zugeht, dann die Brennstoffmenge aber in einem bestimmten Verhältnis auf die Primär- und Sekundärdüsen aufzuteilen ist. Durch die Abzweigung der Sekundärölleitungen von den Primärölleitungen stellt sich allerdings die Brennstoffaufteilung entsprechend den Widerständen in den Zuleitungen ein und es kommt zu einer unkontrollierten Brennstoffzuteilung, die immer wieder zu thermischen Überbelastungen bzw. zu ungleichmäßigen Belastungen der einzelnen Brennkammern bzw. der Brennstoffdüsen, der Flammrohre, Querzündrohre u. dgl. führen und sogar einen Totalschaden der Turbine verursachen kann.

Um beim Ölbetrieb die NOx-Emissionen zu senken, muß Wasser in einem bestimmten Mengenverhältnis zum Öl zur Flammenkühlung eingedüst werden, wodurch das thermische NOx reduziert werden kann. Das vollentsalzte Wasser wird dazu mittels einer entsprechenden Hochdruckpumpe über Mehrfachzuschaltventile einerseits den Primärdüsen, anderseits den Sekundärdüsen zugeleitet, wobei erst ab der Feuerungstemperatur, bei der die Sekundärdüsen den Primärdüsen zugeschaltet werden, die Wassereindüsung erfolgt. Die Regelung der Wassereindüsung wird über ein Klappenventil vorgenommen, das vorerst den Pumpendruck auf den gewünschten Eindüsdruck reduziert, worauf ein mit einem Wasserzähler zusammenwirkendes Stellventil die Wassermenge in Abhängigkeit von der Ölmenge bestimmt, um das maximal erlaubte Mengenverhältnis Wasser/Öl von beispielsweise 0,85 einzuhalten. Auch hier entstehen durch das Klappenventil hohe Lastschwankungen, vor allem während des Beginns der Wassereindüsung, und durch die Verwendung reiner Zuschaltventile kommt es wegen der unterschiedlichen Leitungswiderstände zu einer ungleichmäßigen Aufteilung der Gesamtwassermenge auf die einzelnen Brennkammern mit ungleichmäßigen Belastungen der Brennkammern bzw. Brennkammerteilen.

Bei der Umstellung von Öl- auf Gasbetrieb müssen die Öl- und Wasserkanäle der Brenndüsen mit Luft gekühlt werden und zusätzlich muß durch die Luft das in den Brenndüsen verbleibende Restöl zur Reinigung und zum Schutz vor Verkokung ausgeblasen werden. Es gibt daher eine Ausblaseeinrichtung mit entsprechenden Primär- und Sekundärluftleitungen, wobei die Ausblaseluft vom Gasturbinenkompressor abgezapft und dann mit einem eigenen mechanisch angetriebenen Luftkompressor auf einen beispielsweise 1,4fach erhöhten Kompressordruck zum Ausblasen gegen den Brennkammerdruck gebracht wird. Erfolgt die Umstellung auf Gasbetrieb bei einer Feuerungstemperatur, bei der Primär- und Sekundärdüsen arbeiten, werden sowohl die Primär- als auch die Sekundärluftleitungen schlagartig über reine Auf/Zu-Ventile zugeschaltet, wodurch die Restölmengen ebenfalls schlagartig in den Brennraum eingeblasen werden, so daß es zu einem plötzlichen Leistungsanstieg kommt, der wiederum Lastschwankungen nach sich zieht, was die Lebensdauer der Turbine beeinträchtigt, die Verfügbarkeit wegen der Gefahr eines Turbinenausfalles gefährdet und sogar zur Abschaltung der Turbine wegen Übertemperaturen in den Brennkammern führen kann.

### Darstellung der Erfindung

Der Erfindung liegt daher die Aufgabe zugrunde, ein Ölversorgungssystem der eingangs geschilderten Art anzugeben, das einen einwandfreien Ölbetrieb der Gasturbine unter Einhaltung der Emissionsgrenzwerte auch bei Betriebsumstellungen gewährleistet und das ein die Brennkammern und die Brennkammerteile schonendes Befeuern der Gasturbine mit sich bringt.

Die Erfindung löst diese Aufgabe dadurch, daß die Ölzufuhreinrichtung zusätzlich zum Primärmengenteiler für die Primärölleitungen einen an die Ölversorgungsleitung angeschlossenen, an die Brennkammeranzahl angepaßten Sekundärmengenteiler für die Sekundärölleitungen mit gegenüber dem Primärmengenteiler einstellbarem Teilverhältnis umfaßt und/oder daß in der Wasserzufuhreinrichtung als Verteiler für die Primär- bzw. Sekundärwasserleitungen Mengenteiler oder drehzahlgesteuerte Verteilerpumpen mit einstellbarem Teilverhältnis vorgesehen sind und/oder daß die Ausblaseeinrichtung mit Proportionalminderdruckventilen für die Versorgungsäste ausgestattet ist.

Durch den Primärmengenteiler und den Sekundärmengenteiler, die in einem bestimmten, einstellbaren Teilverhältnis, z. B. 60 : 40, die angeförderte Ölmenge genau auf die Primärölleitungen und die Sekundärölleitungen aufteilen, wobei unter Mengenteiler ein Zwangsmengenteiler, wie ein Zahnrad- oder Kolbenmengenteiler, verstanden wird, ist sowohl für die Primärdüsen als auch für die Sekundärdüsen der Brennkammem eine exakte Ölmengenzuteilung garantiert. In jedem Leistungsbereich wird daher die durch die Primär- bzw. Sekundärdüsen verbrannte Brennstoffmenge einwandfrei vorbestimmt und es kann nie zu einer thermischen Überbelastung der Brenndüsen, Flammrohre u. dgl. kommen. Der vergleichmäßigte Brennerbetrieb steigert die Lebensdauer und erhöht die Verfügbarkeit der Gasturbine und erleichtert nicht zuletzt die Zuregelung des Wassers für die erforderliche Flammenkühlung und NOx-Reduktion.

Die Wasserzufuhreinrichtung selbst ermöglicht durch den Einsatz von Mengenteilern, welche Mengenteiler wiederum Zwangsmengenteiler sind, oder drehzahlgesteuerten Verteilerpumpen für die Primärwasserleitungen bzw. Sekundärwasserleitungen ebenfalls eine exakte Mengenaufteilung im vorgegebenen Teilungsverhältnis der Primärdüsenbeaufschlagung zur Sekundärdüsenbeaufschlagung und zusätzlich die Mengenzuteilung in Abhängigkeit von der jeweiligen den Brennkammern zugeförderten Ölmenge. Außerdem genügt eine Einspeisepumpe geringeren Druckniveaus vor den Mengenteilern bzw. Verteilerpumpen, wodurch die zugeteilten Wassermengen sanft und gleichmäßig von 0 bis zur maximalen Menge erhöht bzw. verringert werden können. Damit wird der Gasturbinenbetrieb weiter vergleichmäßigt und während der gesamten Ölbetriebsdauer für die erforderliche Reduktion des thermischen NOx gesorgt, was eine weitere Schonung der Turbinenteile mit gleichzeitiger Verlängerung der Lebensdauer bedeutet.

Durch den Einbau jeweils eines Proportionalminderdruckventils in die Versorgungsäste für die Primär- bzw. Sekundärluftleitungen läßt sich der Ausblasedruck, der im Endeffekt wesentlich höher sein muß als der Brennkammerdruck, langsam über eine Rampenzeit von einem einstellbaren Vordruck, der dem Brennkammerdruck gleicht, bis zum Endausblasedruck, beispielsweise dem 1,4fachen Kompressordruck, erhöhen, wobei die Rampenzeit den tatsächlichen Gegebenheiten angepaßt sein kann. Mittels der Proportionalminderdruckventile wird daher beim Umstellen des Ölbetriebes auf Gasbetrieb der Luftdruck schlagartig bis auf den einstellbaren Vordruck erhöht und dann über die Rampenzeit gleichmäßig bis zum Endausblasedruck gesteigert, so daß auch die Restbrennstoffmenge aus den Brennerdüsen nur langsam in den Brennraum eingeblasen wird, wodurch ein ungewollter Leistungsanstieg ausbleibt. Es kommt zu einer schondenden Umstellung der Betriebsarten, was wiederum die Lebensdauer der Turbine verlängert und deren Verfügbarkeit wesentlich erhöht.

Besonders vorteilhaft ist es, wenn in die Sekundärölleitungen jeweils ein Umschaltventil mit einem Anschluß einerseits an eine Zuleitung zu einer Primärölleitung und anderseits an eine Rückleitung in den Ölsumpf eingebunden ist. Dieses für alle Sekundärölleitungen als Mehrfachumschaltventil vorgesehene Umschaltventil erlaubt es, die Sekundärölleitungen bei einer Feuerungstemperatur unterhalb einer bestimmten Mindesttemperatur den Primärölleitungen zuzuschalten, so daß die gesamte Ölmenge den Primärdüsen zugefördert wird. Ab dem Erreichen der Mindesttemperatur gibt dann das Mehrfachumschaltventil die Sekundärölleitungen unter gleichzeitigem Abschluß der Zuleitungen zu den Primärölleitungen frei, wodurch im eingestellten Teilverhältnis der Primär- und Sekundärmengenteiler die Primär- und Sekundärdüsen aller Brennkammern exakt mit den erforderlichen Brennstoffteilmengen beaufschlagt werden. Schalten die Umschaltventile die Rückleitung in den Ölsumpf zu, werden auch die Zuleitungen zu den Primärölleitungen zugeschaltet, so daß sowohl die Primärals auch die Sekundärölleitungen in den Ölsumpf entspannen können. Dadurch läßt sich verhindern, daß bei einer Betriebsumstellung das in den Primär- und Sekundärölleitungen eingesperrte Öl unkontrolliert in den Brennraum gedrückt wird, womit die CO-Emission der Gasflamme extrem anstiege und die Einhaltung der Emissionsgrenzen gefährdet wäre.

Um bei einer Umstellung von Öl- auf Gasbetrieb das Nachtropfen von Öl und Wasser zu verhindern bzw. schlagartig zu unterbrechen, sind in jeder Öl-, Wasser- und Luftleitung zu den Brenndüsen Rückschlagventile angeordnet und Rückschlagventile schützen auch vor einem Eindringen von Öl und Wasser in die Ausblaseluftleitungen. Bisher werden nun als Rückschlagventile Flachsitzrückschlagventile verwendet, die mit einer Vielzahl an Verschraubungen jeweils in jeder Zuleitung direkt vor den Brenndüsen sitzen. Um diese Ventile gängig zu halten, muß die Gasturbine laut Betriebsanleitung regelmäßig auf Öl umgestellt werden, wodurch sich die Nachteile der Betriebsumstellung entsprechend summieren. Außerdem ist durch die Vielzahl von Verschraubungen nicht nur deren Hantieren umständlich und zeitaufwendig, sondern es kommt auch aufgrund der Undichtheiten zur Brandgefahr. Die Flachsitzrückschlagventile verkoken wegen des ständigen Kontaktes mit den Medien Wasser und Öl und der hohen Temperaturen verhältnismäßig leicht, was immer wieder zum Blockieren der Rückschlagventile oder zu einem unvollständigen Schließen führt, wodurch wiederum ein unterschiedlicher Massendurchsatz mit der Gefahr eines Abbrennens der Brenndüsenflammrohre u. dgl. und der unkontrollierte Eintrag von Restöl oder Wasser in die Brennkammern mit der Gefährdung der Emissionsgrenzwerte zu befürchten sind. Ähnliches gilt für Primärverteilerventile, die die Primärölleitungen zu den Primärdüsen jeweils einer Brennkammer aufteilen. Um diese Nachteile zu vermeiden, ist den Primärdüsen einer Brennkammer ein Primärventilkopf mit Anschlußbohrungen für die über Rückschlagventile anschließbaren Primäröl-, -wasser- und -luftleitungen vorgeordnet, wobei Luftspülkanäle die Luftanschlußbohrung mit den Öl- und Wasseranschlußbohrungen verbinden, und ähnlich ist der Sekundärdüse einer Brennkammer ein Sekundärventilkopf mit Anschlußbohrungen für die über Rückschlagventile anschließbaren Sekundäröl-, -wasser- und -luftleitungen vorgeordnet, wobei Luftspülkanäle die Luftanschlußbohrungen mit den Öl- und Wasseranschlußbohrungen verbinden. Diese Ventilköpfe erlauben es, die Rückschlagventile zu einem Ventilblock zu vereinen und Kugelrückschlagventile statt der Flachsitzrückschlagventile zu verwenden. Durch geeignete Luftspülkanäle wird außerdem die Ausblaseluft von der Luftanschlußbohrung zu den Öl- und Wasseranschlußbohrungen geleitet, wo sie die entsprechenden Kugelrückschlagventile mit Ausblaseluft umspülen und sie vor einer Verkokung od. dgl. Funktionsstörung schützen. Durch das Verwenden von umspülten und gekühlten Kugelrückschlagventilen wird ein Blockieren oder ein mangelndes Schließen der Rückschlagventile verhindert, so daß die Notwendigkeit der regelmäßigen Betriebsumstellungen für die Gewährleistung der Ventilfunktionen unnötig sind, was zu enormen Kosteneinsparungen und zu einer Erhöhung der Verfügbarkeit führt. Die Ventilköpfe erleichtern weiters die Handhabung und Montage der Ventile, die Gefahr von Leckagen wird minimiert und das Platzangebot im Bereich der Brennkammerverrohrung entsprechend vergrößert.

Da im Bereich der ölführenden Leitungen häufig Schaltventile zum Einsatz kommen, die über Steuerventile hydraulisch angesteuert werden, besteht die Gefahr, daß bei einer Umschaltung von einer Ölbefeuerung auf eine Gasbefeuerung die dann nicht mehr betätigten Steuerventile, im allgemeinen Schieberventile, aufgrund einer thermischen Belastung verkleben und nach einem Zurückschalten der Gasturbine auf eine Ölbefeuerung nicht mehr einsatzfähig sind. Um trotz dieser Verklebungsgefahr die Steuerfähigkeit sicherzustellen, sind in den ölführenden Leitungen über Steuerventile ansteuerbare Schaltventile vorgesehen, weisen die Steuerleitungen zwischen den Schaltventilen und den Steuerventilen Absperrventile auf und ist den Steuerventilen eine Steuereinrichtung zur periodischen Betätigung der Steuerventile bei geschlossenen Absperrventilen zugeordnet, so daß durch die sich wiederholende Betätigung der Steuerventile deren Einsatzbereitschaft gewährleistet werden kann. Während der Betätigung der Steuerventile müssen die die Schaltventile beaufschlagenden Steuerleitungen selbstverständlich geschlossen sein, um Fehlschaltungen auszuschließen.

Eine weitere Verbesserung der Ausblasewirkung läßt sich dadurch erreichen, daß die Öl- und Wasseranschlußbohrungen zu einer Zufuhrbohrung zusammenlaufen, die sich in mehrere Teilbohrungen verzweigt und durch diese umfangseitig in einen Verteilerraum einmündet, von dem über ein Verteilerventil Düsenkanäle zu den Primärdüsen führen, wobei vorzugsweise in den Verteilerraum ein Ringeinsatz eingelegt ist. Das Aufteilen der Zufohrbohrung in Teilbohrungen vermeidet das Ansammeln größerer Restölmengen in Leitungen großen Querschnittes und die umfangseitig in den Verteilerraum eingeblasene Luft kann so den gesamten Verteilerraum gut erfassen und sauber ausblasen. Dieses Ausblasen wird durch den Ringeinsatz für den Verteilerraum weiter verbessert, da durch den im Querschnitt keilförmigen Ringeinsatz Toträume beseitigt und die verbleibenden Restölmengen minimiert werden können. Da außerdem durch den Ventilkopf die Strömungswege zu den Brenndüsen möglichst kurz bleiben, wird insgesamt die Restölmenge weiter verringert und das Ausblasen dieser Restölmenge erleichtert.

### Kurze Beschreibung der Zeichnung

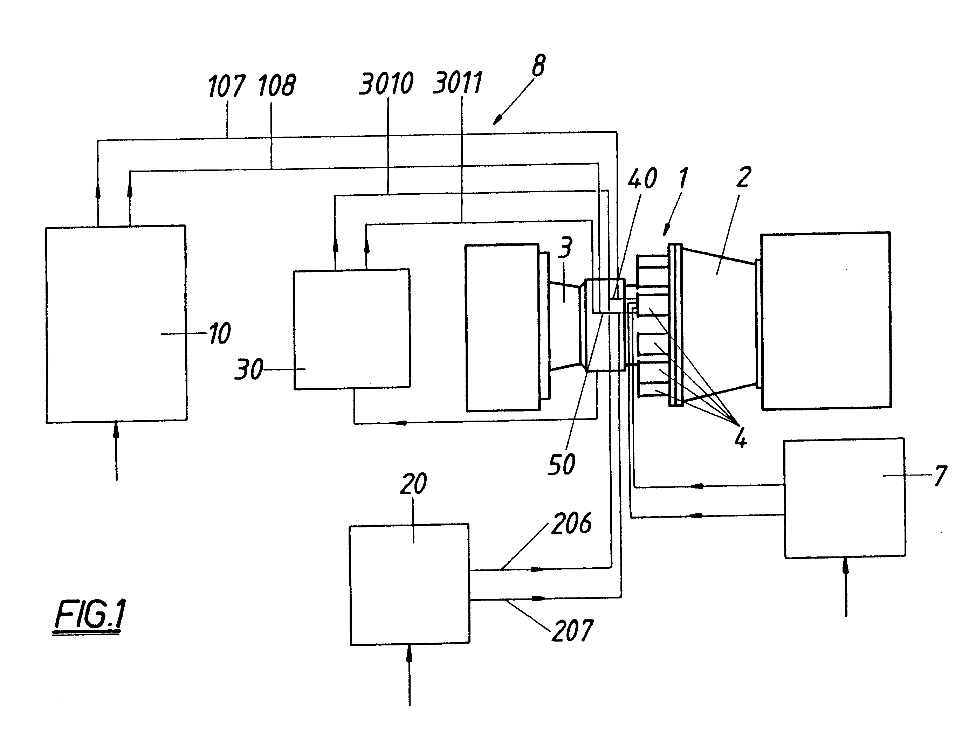

In der Zeichnung ist der Erfindungsgegenstand beispielsweise veranschaulicht, und zwar zeigen
- Fig. 1: ein Anlagenschema einer Gasturbine mit einem erfindungsgemäßen Ölversorgungssystem,

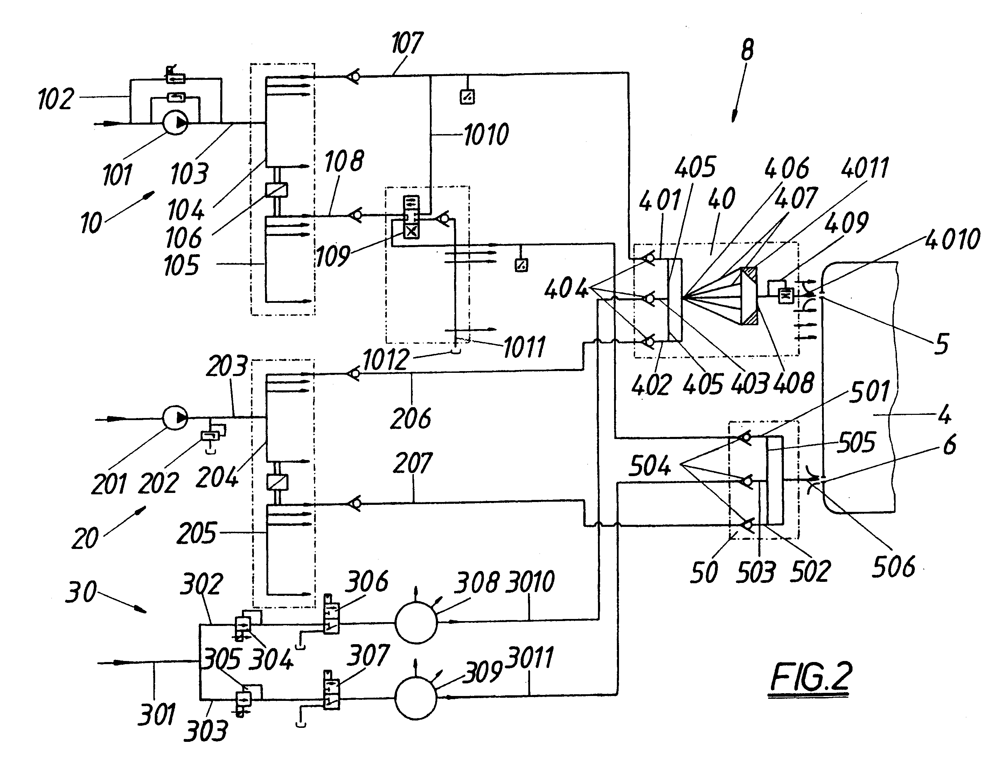

- Fig. 2: das Schema dieses Ölversorgungssystems in größerem Maßstab und
- Fig. 3: ein Blockschaltbild zur periodischen Betätigung eines Steuerventiles zur hydraulischen Beaufschlagung eines Schaltventiles in einer ölführenden Leitung.

### Bester Weg zur Ausführung der Erfindung

Eine Gasturbine 1 mit Turbinenteil 2 und Kompressorteil 3 ist beispielsweise mit zehn Brennkammern 4 ausgerüstet, die jeweils mehrere, beispielsweise fünf, entlang des Umfangs verteilte Primärdüsen 5 und eine zentrale Sekundärdüse 6 aufnehmen, wobei die Brennkammern 4 wahlweise über ein Gasversorgungssystem 7 gasbefeuerbar oder über ein Ölversorgungssystem 8 ölbefeuerbar sind.

Das Ölversorgungssystem 8 umfaßt eine Ölzufuhreinrichtung 10, eine Wasserzufuhreinrichtung 20 und eine Ausblaseeinrichtung 30, welche Einrichtungen für jede Brennkammer 4 eine Primärleitung für die Primärdüsen 5 und eine Sekundärleitung für die Sekundärdüsen 6 aufweisen, von welchen beispielsweise zehn Primärleitungen und zehn Sekundärleitungen der Einfachheit halber jeweils immer nur eine dargestellt ist.

Die Ölzufuhreinrichtung 10 weist eine über eine Ölpumpe 101 und einen Ölregler 102 führende Ölversorgungsleitung 103 auf, an die parallel ein Primärmengenteiler 104 und ein Sekundärmengenteiler 105 angeschlossen sind. Diese Mengenteiler, beispielsweise Zahnradmengenteiler, sind miteinander über ein Getriebe 106 im Sinne eines bestimmten, einstellbaren Teilverhältnisses antriebsverbunden, wobei die Mengenteiler jeweils der Brennkammeranzahl entsprechend viele Teilleitungen, beispielsweise zehn Primärölleitungen 107 und zehn Sekundärölleitungen 108 mit genau aufgeteilten Teilölmengen beaufschlagen. Die Primärölleitungen 107 führen zu einem den Primärdüsen 5 jeder Brennkammer 4 vorgeordneten Primärventilkopf 40 und die Sekundärölleitungen 108 zu einem den Sekundärdüsen 6 der Brennkammern 4 vorgeordneten Sekundärventilkopf 50. Außerdem ist in jede der Sekundärölleitungen 108 ein Umschaltventil 109 eingebunden, welche Umschaltventile zu einem Mehrfachumschaltventil zusammengefaßt sind und jeweils die Sekundärölleitungen 108 freigeben oder wahlweise ihren Anschluß einerseits an eine Zuleitung 1010 an eine Primärölleitung 107 oder anderseits an eine Rückleitung 1011 in den Ölsumpf 1012 erlauben.

Die Wasserzufuhreinrichtung 20 umfaßt eine über eine Einspeisepumpe 201 und einen Druckregler 202 führende Wasserversorgungsleitung 203, an die zwei Mengenteiler 204, 205 zur Aufteilung der Wasserversorgungsleitung in der Brennkammeranzahl entsprechend viele Primärwasserleitungen 206 und Sekundärwasserleitungen 207 anschließen, wobei die Mengenteiler 204, 205 in einem dem Teilverhältnis von Primär- und Sekundärmengenteiler 104, 105 entsprechenden Teilverhältnis wirksam sind und eine exakte Wassermengenaufteilung auf die Primär- und Sekundärwasserleitungen in Abhängigkeit von den jeweiligen die Primär- und Sekundärölleitungen beaufschlagenden Ölmengen vornehmen. Die Primärwasserleitungen 206 münden ebenfalls in den Primärventilkopf 40 und die Sekundärwasserleitungen 207 in den Sekundärventilkopf 50.

Die Ausblaseeinrichtung 30 weist eine über den Kompressorteil 3 der Gasturbine 1 luftbeaufschlagbare, über einen nicht weiter dargestellten zusätzlichen Luftkompressor und einen Luftkühler führende Luftversorgungsleitung 301 auf, die sich in zwei Versorgungsäste 302, 303 aufteilt, welche Versorgungsäste jeweils über ein Proportionalminderdruckventil 304, 305 und ein Zuschaltventil 306, 307 zu einer Ringleitung 308, 309 führen, von welcher Ringleitung 308 der Brennkammeranzahl entsprechend viele Primärluftleitungen 3010 und von welcher Ringleitung 309 der Brennkammeranzahl entsprechend viele Sekundärluftleitungen 3011 abzweigen, die jeweils wiederum in den Primärventilkopf 40 bzw. den Sekundärventilkopf 50 der Brennkammern 4 einmünden.

Die Primärventilköpfe 40 sind mit Anschlußbohrungen 401, 402, 403 für die Primäröl-, -wasser- und -luftleitungen 107, 206, 3010 versehen und mit Kugelrückschlagventilen 404 für diese Leitungen ausgestattet, wobei von der Luftanschlußbohrung 403 Luftspülkanäle 405 zu den Öl- und Wasseranschlußbohrungen 401, 402 ausgehen. Die Ölanschlußbohrung 401 läuft mit der Wasseranschlußbohrung 402 zu einer Zufuhrbohrung 406 zusammen, die sich in mehrere Teilbohrungen 407 verzweigt und über diese umfangseitig in einen Verteilerraum 408 mündet. Aus dem Verteilerraum führen über ein Verteilerventil 409 Düsenkanäle 4010 zu den Primärdüsen 5, in welchem Verteilerraum 408 ein Ringeinsatz 4011 eingelegt sein kann.

Der Sekundärventilkopf 50 weist Anschlußbohrung 501, 502, 503 für die über Rückschlagventile 504 anschließenden Sekundäröl-, -wasser- und -luftleitungen 108, 207, 3011 auf, wobei Luftspülkanäle 505 die Luftanschlußbohrung 503 mit den Öl- und Wasseranschlußbohrungen 501, 502 verbinden. Vom Sekundärventilkopf 50 führt dann ein Düsenkanal 506 zur Sekundärdüse 6.

Bei Ölbetrieb der Gasturbine wird Öl über die Versorgungsleitung 103 mit entsprechendem Druck und in erforderlicher Menge zugefördert und die Primär- und Sekundärmengenteiler 104, 105 teilen die Ölmenge im vorbestimmten Mengenverhältnis, beispielsweise 60 : 40, auf die Primär- bzw. Sekundärölleitungen auf. Bis zu einer bestimmten Feuerungsmindesttemperatur ist das Mehrfachumschaltventil 109 so geschaltet, daß die Sekundärölleitungen 108 an die Zuleitung 1010 angeschlossen sind und daher die Primär- und Sekundärölmenge gemeinsam durch die Primärölleitung 107 den Brennkammern zufließen. Bei Überschreiten dieser Mindesttemperatur schaltet das Mehrfachventil 109 um und gibt die Sekundärölleitung 108 frei, so daß nun in entsprechender Aufteilung Primäröl bzw. Sekundäröl über die Primärölleitungen 107 und die Sekundärölleitungen 108 den Primärdüsen bzw. Sekundärdüsen der Brennkammem zugefördert wird. Ab dem Zuschalten der Sekundärdüsen wird auch die Wasserzufuhreinrichtung 20 aktiviert, so daß das über die Speisepumpe 201 mit entsprechendem Druck und entsprechender Menge zugeförderte entsalzte Wasser durch die Mengenteiler 204, 205 auf die Primärwasserleitungen 206 und die Sekundärwasserleitungen 207 aufgeteilt und in Abhängigkeit von der jeweils gelieferten Ölmenge bis zu einem Verhältnis von 0,85 den Brennkammern zugefördert wird, wo das Wasser in den Primär- bzw. Sekundärventilköpfen 40, 50 mit dem Öl vermischt und gemeinsam mit dem Öl die Primär- bzw. Sekundärdüsen 5, 6 beaufschlagt, was eine Flammenkühlung und eine Reduktion des thermischen NOx in den Brennkammern mit sich bringt. Wird der Betrieb von Öl auf Gas umgestellt, was bei beliebigen Feuerungstemperaturen erfolgen kann, wird die Öl- und Wasserzufuhr abgeschaltet, wobei das Umschaltventil 109 die Sekundärölleitung 108 und die Zuleitung 1010 an die Rückleitung 1011 anschließt, so daß sowohl die Primärölleitung 107 als auch die Sekundärölleitung 108 in den Ölsumpf 1012 entspannen. Gleichzeitig mit dem Abschalten von Öl- und Wasserzufuhr wird über die Ausblaselufteinrichtung 30 Ausblaseluft vom Kompressorteil der Turbine abgeleitet und die Luftversorgungsleitung 301 beaufschlagt. Ausblaseluft wird so durch die Versorgungsäste 302, 303 in einem durch die Proportionaldruckminderventile 304, 305 entsprechend auf den Brennkammerdruck abgesenkten Druck über die Primär- bzw. Sekundärluftleitungen 3010, 3011 den Primär- bzw. Sekundärdüsenköpfen 40, 50 zugeführt, wo sie bei einem sich vom Brennkammerdruck bis zum entsprechend erhöhten Endausblasedruck steigemden Druck die Restölmengen in den Rückschlagventilbereichen und in den Kanälen und Bohrungen der Ventilköpfe sanft ausbläst und dadurch den auf Gasbetrieb bereits umgestellten Verbrennungsvorgang unbeeinträchtigt läßt.

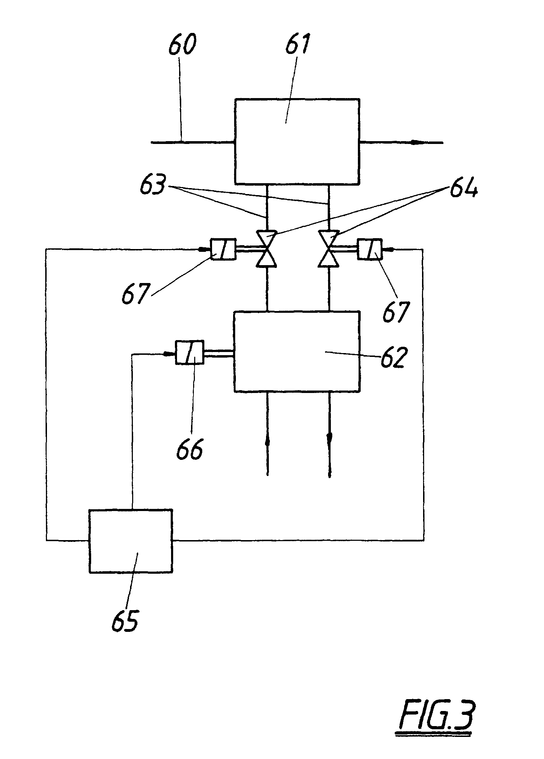

Um die beispielsweise für die Fördermengenregelung oder andere Schaltvorgänge in den ölführenden Leitungen 60 eingesetzten Schaltventile 61 über Steuerventile 62 auch nach einer längeren Unterbrechung sicher ansteuern zu können, sind gemäß der Fig. 3 in den hydraulischen Steuerleitungen 63 für die Ölzu- und -abfuhr zwischen dem Schaltventil 61 und dem Steuerventil 62 Absperrventile 64 vorgesehen, die vorteilhaft als Absperrkugelhähne ausgebildet sind. Damit wird es möglich, bei gesperrten Steuerleitungen 63 das Steuerventil 62 über eine Steuereinrichtung 65 periodisch zu betätigen, die einerseits den Stelltrieb 66 für das Steuerventil 62 und anderseits die Stelltriebe 67 für die Absperrventile 64 beaufschlagt. Die beispielsweise elektromagnetische Betätigung des Steuerventiles 62 über den Stelltrieb 66 bewirkt bei einer periodischen Wiederholung, daß sich das Stellglied des Steuerventiles 62, beispielsweise ein Steuerkolben, nicht im Gehäuse festkleben kann, so daß nach dem Umschalten der Gasturbine auf eine Ölbefeuerung die Steuerfähigkeit des Ölversorgungssystems gesichert ist.

## Patentansprüche

1. Ölversorgungssystem (8) für eine Gasturbine (1), deren primär- und sekundärdüsenbestückte Brennkammem (4) wahlweise gas- oder ölbefeuerbar sind, mit einer Ölzufuhreinrichtung (10), einer Wasserzufuhreinrichtung (20) und einer Ausblaseeinrichtung (30), welche Ölzufuhreinrichtung (10) eine Ölversorgungsleitung (103) mit einem an die Brennkammeranzahl angepaßten Mengenteiler (104), einzelne, vom Mengenteiler (104) zu den Brennkammern (4) führende Primärölleitungen (107) zur Ölbeaufschlagung der Primärdüsen (5) und zu den Primärölleitungen (107) parallelverlaufende, zu den Brennkammern (4) führende Sekundärölleitungen (108) zur Ölbeaufschlagung der Sekundärdüsen (6) aufweist, welche Wasserzufuhreinrichtung (20) eine Wasserversorgungsleitung (203) und der Brennkammeranzahl entsprechend viele, über einen Verteiler an die Wasserversorgungsleitung (203) angeschlossene Primärwasserleitungen (206) und Sekundärwasserleitungen (207) zur Wasserbeaufschlagung der Primär- und Sekundärdüsen (5, 6) bzw. der zugehörigen Brennzonen aufweist und welche Ausblaseeinrichtung (30) eine sich in zwei Versorgungsäste (302, 303) aufteilende Luftversorgungsleitung (301) und zwei an die Versorgungsäste (302, 303) über Zuschaltventile (306, 307) angeschlossene Ringleitungen (308, 309) mit jeweils der Brennkammeranzahl entsprechend vielen abzweigenden Primärluftleitungen (3010) und Sekundärluftleitungen (3011) zum Ausblasen der Primär- bzw. Sekundärdüsen (5, 6) aufweist, **dadurch gekennzeichnet, daß** die Ölzufuhreinrichtung (10) zusätzlich zum Primärmengenteiler (104) für die Primärölleitungen (107) einen an die Ölversorgungsleitung (103) angeschlossenen, an die Brennkammeranzahl angepaßten Sekundärmengenteiler (105) für die Sekundärölleitungen (108) mit gegenüber dem Primärmengenteiler (104) einstellbarem Teilverhältnis umfaßt und/oder daß in der Wasserzufuhreinrichtung (20) als Verteiler für die Primär- bzw. Sekundärwasserleitungen (206, 207) Mengenteiler (204, 205) oder drehzahlgesteuerte Verteilerpumpen mit einstellbarem Teilverhältnis vorgesehen sind und/oder daß die Ausblaseeinrichtung (30) mit Proportionalminderdruckventilen (304, 305) für die Versorgungsäste (302, 303) ausgestattet ist.

2. Ölversorgungssystem nach Anspruch 1, **dadurch gekennzeichnet, daß** in die Sekundärölleitungen (108) jeweils ein Umschaltventil (109) mit einem Anschluß einerseits an eine Zuleitung (1010) zu einer Primärölleitung (107) und anderseits an eine Rückleitung (1011) in den Ölsumpf (1012) eingebunden ist.

3. Ölversorgungssystem nach Anspruch 1 oder 2, **dadurch gekennzeichnet, daß** den Primärdüsen (5) einer Brennkammer (4) ein Primärventilkopf (40) mit Anschlußbohrungen (401, 402, 403) für die über Rückschlagventile (404) anschließbaren Primäröl-, -wasser- und -luftleitungen (107, 206, 3010) vorgeordnet ist, wobei Luftspülkanäle (405) die Luftanschlußbohrung (403) mit den Öl- und Wasseranschlußbohrungen (401, 402) verbinden.

4. Ölversorgungssystem nach einem der Ansprüche 1 bis 3, **dadurch gekennzeichnet, daß** in den ölführenden Leitungen (60) über Steuerventile (62) ansteuerbare Schaltventile (62) vorgesehen sind, daßdie Steuerleitungen (63) zwischen den Schaltventilen (61) und den Steuerventilen (62) Absperrventile (64) aufweisen und daß den Steuerventilen (62) eine Steuereinrichtung (65) zur periodischen Betätigung der Steuerventile (62) bei geschlossenen Absperrventilen (64) zugeordnet ist.

5. Ölversorgungssystem nach Anspruch 3, **dadurch gekennzeichnet, daß** die Öl- und Wasseranschlußbohrungen (401, 402) zu einer Zufuhrbohrung (406) zusammenlaufen, die sich in mehrere Teilbohrungen (407) verzweigt und durch diese umfangseitig in einen Verteilerraum (408) einmündet, von dem über ein Verteilerventil (409) Düsenkanäle (4010) zu den Primärdüsen (5) führen, wobei vorzugsweise im Verteilerraum (408) ein Ringeinsatz (4011) eingelegt ist.

6. Ölversorgungssystem nach einem der Ansprüche 1 bis 5, **dadurch gekennzeichnet, daß** der Sekundärdüse (6) einer Brennkammer (4) ein Sekundärventilkopf (50) mit Anschlußbohrungen (501, 502, 503) für die über Rückschlagventile (504) anschließbaren Sekundäröl-, -wasser- und -luftleitungen (108, 207, 3011) vorgeordnet ist, wobei Luftspülkanäle (505) die Luftanschlußbohrung (503) mit den Öl- und Wasseranschlußbohrungen (501, 502) verbinden.

## Claims

1. An oil supply system (8) for a gas turbine (1), in which the combustion chambers (4) equipped with primary and secondary nozzles are adapted to be gas or oil fired selectively, with an oil supply device (10), a water supply device (20) and a blow-out device (30), which oil supply device (10) comprises an oil supply line (103) with a flow divider (104) adapted to the number of combustion chambers, individual primary oil lines (107) leading from the flow divider (104) to the combustion chambers (4), for supplying oil to the primary nozzles (5), and secondary oil lines (108) in parallel with the primary oil lines (107) and leading to the combustion chambers (4) for supplying oil to the secondary nozzles (6), which water supply device (20) comprises a water supply line (203) and, in a number corresponding to the number of combustion chambers and connected via a distributor to the water supply line (203), primary water lines (206) and secondary water lines (207) for supplying water to the primary and secondary nozzles (5, 6) and the associated combustion zones, and which blow-out device (30) comprises an air supply line (301) dividing into two supply branches (302, 303) and two ring lines (308, 309) connected to the supply branches (302, 303) via sequence valves (306, 307), said ring lines respectively having, in a number corresponding to the number of combustion chambers, branch-off primary air lines (3010) and secondary air lines (3011) for blowing out the primary and secondary nozzles (5, 6), **characterised in that** the oil supply device comprises in addition to the primary flow divider (104) for the primary oil lines (107) a secondary flow divider (105) connected to the oil supply line (103) and adapted to the number of combustion chambers, said secondary flow divider (105) being intended for the secondary oil lines (108) with a division ratio which is adjustable in relation to the primary flow divider (104) and/or that there are provided in the water supply device (20) as distributors for the primary and secondary water lines (206, 207) flow dividers (204, 205) or speed-controlled distributor pumps with an adjustable division ratio and/or that the blow-out device (30) is equipped with proportional reduced pressure valves (304, 305) for the supply branches (302, 303).

2. An oil supply system according to claim 1, **characterised in that** a changeover valve (109) with a connection on the one hand to a supply line (101) to a primary oil line (107) and on the other hand to a return line (1011) to the oil sump (1012) are incorporated respectively in the secondary oil lines (108).

3. An oil supply system according to claim 1 or 2, **characterised in that** a primary valve head (40) with connecting bores (401, 402, 403) for the primary oil, primary water and primary air lines (107, 206, 3010) connectable via non-return valves (404) is disposed upstream of the primary nozzles (5) of a combustion chamber (4), while air scavenging ducts (405) connect the air connecting bore (403) to the oil and water connecting bores (401, 402).

4. An oil supply system according to any one of claims 1 to 3, **characterised in that** actuating valves (62) controllable via control valves (62) are provided in the oil-carrying lines (60), **in that** the control lines (63) between the actuating valves (61) and the control valves (62) have shut-off valves (64) and **in that** a control device (65) for periodic actuation of the control valves (62) when the shut-off valves (64) are closed is associated with the control valves (62).

5. An oil supply system according to claim 3, **characterised in that** the oil and water connecting bores (401, 402) converge into a supply bore (406) which branches into a number of dividing bores (407) and which leads peripherally through said dividing bores (407) into a distributor chamber (408), from which nozzle ducts (4010) lead via a distributor valve (409) to the primary nozzles (5), an annular insert (401) preferably being inserted in the distributor chamber (408).

6. An oil supply system according to any one of claims 1 to 5, **characterised in that** a secondary valve head (50) with connecting bores (501, 502, 503) for the secondary oil, secondary water and secondary air lines (108, 207, 3011) connectable via non-return valves (504) is disposed upstream of the secondary nozzle (6), while air scavenging ducts (505) connecting the air connecting bore (503) to the oil and water connecting bores (501, 502).

## Revendications

1. Système d'alimentation en fioul (8) pour une turbine à gaz (1), dont les chambres de combustion (4) munies de buses secondaires sont susceptibles d'être chauffées au gaz ou au fioul, au choix, avec un dispositif d'amenée de fioul (10), un dispositif d'amenée d'eau (20) et un dispositif de ramonage par soufflage (30), le dispositif d'amenée de fioul (10) présentant une conduite d'alimentation en fioul (103) avec un diviseur de débit (104) adapté au nombre de chambres de combustion, différentes conduites à fioul primaires (107) menant du diviseur de débit (104) aux chambres de combustion (4) pour l'alimentation en fioul des buses primaires (5), et des conduites à fioul secondaires (108), s'étendant parallèlement aux conduites à fioul primaires (107), menant aux chambres de combustion (4), pour alimenter en fioul les buses secondaires (6), le dispositif d'amenée d'eau (20) présentant une conduite d'alimentation en eau (203) et une pluralité de conduites d'eau primaires (206) dont le nombre correspond à celui des chambres de combustion, raccordées à la conduite d'alimentation en eau (203) par un distributeur, et des conduites d'eau secondaires (207) pour alimenter en eau les buses primaires et secondaires (5, 6) et/ou les zones de combustion afférentes, et le dispositif de ramonage par soufflage (30) présentant une conduite d'alimentation en air (301), se subdivisant en deux branches d'alimentation (302, 303), et deux conduites annulaires (308, 309) se raccordant aux branches d'alimentation (302, 303) par des soupapes de raccordement (306, 307), les conduites annulaires ayant des conduites d'air primaires (3010) et des conduites d'air secondaires (3011) se ramifiant en un nombre correspondant chaque fois au nombre des chambres de combustion, pour ramoner par soufflage les buses d'air primaires et/ou secondaires (5, 6), **caractérisé par le fait que** le dispositif d'alimentation en fioul (10), comprend en plus du diviseur de débit primaire (104) pour les conduites à fioul primaires (107), un diviseur de débit secondaire (105) raccordé à la conduite d'alimentation en fioul (103), adapté au nombre de chambres de combustion, pour les conduites à fioul secondaires (108), avec un rapport de division réglable par rapport au diviseur de débit primaire (104), et/ou **par le fait que** dans le dispositif d'amenée d'eau (20) sont prévus pour les conduites d'eau primaires et/ou secondaires (206, 207) des diviseurs de débit (204, 205) ou des pompes à diviseur, dont la vitesse de rotation est commandée, ayant un rapport de division réglable, et/ou **par le fait que** le dispositif de ramonage par soufflage (30) est équipé de soupapes de pression minimale proportionnelles (304, 305) pour les branches d'alimentation (302, 303).

2. Système d'alimentation en fioul selon la revendication 1, **caractérisé par le fait que**, dans chacune des conduites à fioul secondaires (108), est intégrée une soupape de commutation (109) avec un raccordement, d'une part, à une conduite d'amenée (1010) allant à une conduite à fioul primaire (107) et, d'autre part, à une conduite de retour (1011), dans le carter de fioul (1012).

3. Système d'alimentation en fioul selon la revendication 1 ou 2, **caractérisé par le fait que**, en amont des buses primaires (5) d'une chambre de combustion (4), est disposée une tête de soupape primaire (40) ayant des perçages de raccordement (401, 402, 403) pour les conduites primaires à fioul, à eau et à air (107, 206, 3010) pouvant être raccordées par l'intermédiaire de clapets anti-retour (404), les canaux de balayage à l'air (405) reliant le perçage de raccordement d'air (403) aux perçages de raccordement de fioul et d'eau (401, 402).

4. Système d'alimentation en fioul selon l'une des revendications 1 à 3, **caractérisé par le fait, que** dans les conduites (60) assurant le guidage du fioul, sont prévues des soupapes de commutation (61) pouvant être commandées par des soupapes de commande (62), **par le fait que** les conduites de commande (63), installées entre les soupapes de commutation (61) et les soupapes de commande (62), présentent des soupapes d'isolement (64), et **par le fait qu'**aux soupapes de commande (62) est associé un dispositif de commande (65) pour actionner périodiquement les soupapes de commande (62) lorsque les soupapes d'isolement (64) sont fermées.

5. Système d'alimentation en fioul selon la revendication 3, **caractérisé par le fait que** les perçages de raccordement de fioul et d'eau (401, 402) se rejoignent en un perçage d'amenée (406) qui se ramifie en plusieurs perçages partiels (407) et, au moyen de ceux-ci, débouchant en périphérie dans une enceinte de distribution (408), d'où des canaux de buses (4010) mènent, par l'intermédiaire d'une soupape distributrice (409), aux buses primaires (5), de préférence un insert annulaire (4011) étant inséré dans l'enceinte de distribution (408).

6. Système d'alimentation en fioul selon l'une des revendications 1 à 5, **caractérisé par le fait que**, en amont de la buse secondaire (6) d'une chambre de combustion (4), est branchée une tête de soupape secondaire (50) munie de perçages de raccordement (501, 502, 503) pour des conduites secondaires à fioul, à eau et à air (108, 207, 3011) pouvant être raccordées par des clapets anti-retour (504), des canaux de balayage à l'air (505) reliant le perçage de raccordement d'air (503) aux perçages de raccordement de fioul et d'eau (501, 502).
